# EUROPEAN PATENT SPECIFICATION

(11) **EP 2 887 767 B1**
(45) Date of publication and mention of the grant of the patent: **14.02.2018**
(21) Application number: 13197875.1
(22) Date of filing: 17.12.2013
(51) Int. Cl.: H05B 33/08

(54) **Switching power supply controller**
Schaltnetzteilsteuerung
Commutation de contrôleur d'alimentation électrique

(43) Date of publication of application: 24.06.2015
(73) Proprietor: Silergy Corp., Grand Cayman KY1-1208 (KY)
(72) Inventor: van den Broeke, Leendert Albertus Dick, Redhill Surrey RH1 1SH (GB); de Nie, Robert Henri, Redhill Surrey RH1 1SH (GB)
(74) Representative: Laufhütte, Dieter

(56) References cited:
- EP-A1- 2 515 611
- EP-A1- 2 611 264
- DE-A1-102012 205 312
- US-A1- 2011 074 292
- US-A1- 2011 291 577
- US-A1- 2013 278 145
- US-A1- 2013 307 431

## Description

This invention relates to a switching power supply controller and a dimmable solid state light driver controller for use with a phase cut dimmer. It also relates to a dimmable solid state light driver using said controller and a solid state light including said driver.
Mains dimmable solid state light or LED drivers typically include a switching power supply and may be of single stage type or dual stage type. Single stage drivers can be constructed in a cost-effective as they employ a single high-voltage switching element and a single inductor for receiving the energy to be applied to the load. It will be appreciated by those skilled in the art that for a driver to be controlled by a phase-cut dimmer, a plurality of requirements must be satisfied. Thus, it is common for known high-performance existing dimmable LED drivers to be based on a dual stage concept, in which the first stage takes care of shaping the input current from the phase cut dimmer for a good power factor and optimal loading of the phase-cut dimmer. The power converted by the first stage is then stored in an intermediate storage capacitor. The second stage takes care of driving the LED load with a constant output power. Due to this decoupling, the first stage and the second stage can be optimized independently. In particular, a disturbance in the waveform from the dimmer, or some irregularity in operation of the first stage, does not result in disturbance of the light output. For a single stage switching power supply solid state light driver, precise control of the light output is more difficult. United States patent application publication number US2013/0307431 A1 discloses a system controller configured to receive an input signal from a phase-cut dimmer and to output a gate drive signal to a switching power supply which is connected between the phase-cut dimmer and a solid state light source. The system controller is further configured to carry out a soft control scheme by determining a burst period comprising a period of time less than a conduction period of the input signal and comprising a first subset of switching cycles and a second subset of switching cycles.

European Patent application publication number EP2611264 A1 discloses a method and apparatus for controlling the equivalent resistance of a switching converter which is connected between a phase cut dimmer and a solid state light source. The method includes receiving, from the phase cut dimmer, a power source input signal, and generating a first and a second control signal according to a voltage level and a state of the power source input signal to control the switching converter in different modes. According to a first aspect of the invention we provide a switching power supply controller, the controller comprising an input signal sensing input connected to a phase cut dimmer and a switch signal output connected to a switch of a switching power supply, and configured to generate a switch signal for controlling the switch of the switching power supply to convert an input signal from the phase cut dimmer into a driving signal for a solid state lighting element, wherein the switching power supply controller is configured to;
determine a conduction period of the input signal from the phase cut dimmer within a half cycle period of the input signal;
determine a burst period within said conduction period comprising a period of time less than said conduction period;
generate a switch signal comprising a plurality of switching cycles over the burst period, the switch signal comprising a first subset of switching cycles and a second subset of switching cycles, wherein the switching power supply controller is configured to control the switching cycles of the second subset such that the average energy transferred per switching cycle to the driving signal is less than the average energy transferred per switching cycle to the driving signal for the switching cycles of the first subset.

This is advantageous as the controller has been found to be able to control the switching power supply such that a precisely controlled energy transfer in a fine granularity to the solid state light element is achieved. Such fine granularity is particularly important for smooth operation at low brightness levels where the number of switching cycles is small. Also, for a stable light output, this configuration may allow the sensitivity of the brightness control to be substantially constant over the possible brightness settings. This controller is particularly suited to use with a single stage switching power supply, although it may be used with a dual stage supply. The input signal from a phase cut dimmer will have conduction periods (comprising parts of each half mains voltage waveform) in which a mains input is conducted by the dimmer and non-conduction periods in which the mains input is not conducted. The controller of the invention may be configured to identify these conduction periods and determine the burst period, over which the controller is configured to perform switching of the power supply, accordingly. It has been found that it is advantageous to perform the switching over a period less than the conduction period for achieving a reliable energy transfer to the solid state light. Each switching cycle i.e. the switching power supply transitioning to the on-state and then to the off-state, transfers a particular quantity of energy to the driving signal. The use of a first subset of switching cycles and a second subset of switching cycles may allow the energy transferred by the power supply to be controlled with less granularity, constant sensitivity and consistent response.

The energy transferred per switching cycle can be controlled by controlling the duration of the on-state of the switching power supply, possibly based on the current flow during each switching cycle. The switching cycles of the second subset may be configured to each have a lower energy transfer to the driving signal than the switching cycles of the first subset.

The controller may be configured to control the switch signal such that the energy transferred per switching cycle to the driving signal is decremented over the switching cycles of the second subset. This "ramp-down" of the energy of the switching cycles of the second subset is advantageous. In some applications a ramp down may assist the phase cut dimmer to remain in its conduction period rather than stop conducting earlier than it should.

The second subset may include a plurality of switching cycles, the duration of said switching cycles controlled such that the peak current achieved over subsequent switching cycles in the second subset is reduced over the second subset. Thus, the controller may be configured to receive a measure of the current flow during each switching cycle and the duration of the cycle is controlled by measuring when the current flow reaches a peak current threshold. The peak threshold current may comprise a function of time over the duration of the second subset or a function of the number of switching cycles in the second subset.

The controller may be configured to control the duration of the switching cycles of the first subset by determining when the current flow during a switching cycle reaches a predetermined maximum peak current. Thus, the first subset may comprise a plurality of switching cycles each having the substantially the same energy transfer to the driving signal, as controlled by the predetermined maximum peak current.

The controller may be configured to reduce the duration of the on time of the switching cycles of the second subset over the plurality of switching cycles. The switching cycles of the first subset may be longer than the switching cycles of the second subset. Further, the switching cycles of the second subset may be made decrementally shorter over the second subset.

The controller may be configured to position the burst period within the conduction period by a) using a voltage threshold, wherein the burst period is configured to comprise a period of time during the conduction period in which the voltage of the input signal is greater than or equal to the voltage threshold or b) by using timing information of the conduction period and positioning the burst period such that it is temporally spaced from the end of the conduction period for a forward phase cut dimmer or spaced from the beginning of the conduction period for a backward phase cut dimmer. The controller may be configured to measure the voltage of the input signal and determine said burst period using a voltage threshold, wherein the burst period is configured to comprise a period of time during the conduction period in which the voltage of the input signal is greater than or equal to the voltage threshold. The voltage threshold may comprise 50 Volts. It has been found that starting or ending the burst period too close to the zero crossing of the conduction period can detrimentally effect the accuracy of the desired energy transfer to the driving signal. Thus, temporally positioning the burst period within the conduction period such that the voltage of the input signal for the duration of the burst period is above a voltage threshold is advantageous. As alternative to voltage sensing, the controller may use information from phase locked loop that is locked to the mains phase received by the dimmer with additional information of the timing of the leading/trailing edge obtained from a timing element. The timing element may determine the moment of turn-on (for a forward phase cut dimmer) or moment of turn-off (for a backward phase cut dimmer).

The controller may be configured to determine an output power level setting by measurement of the input signal, the controller configured to generate the switching signal as a function of the output power level setting. The conduction angle of the input signal from the phase cut dimmer may be measured and mapped onto a desired output level or brightness level. Alternatively, the average voltage of the input signal over the conduction period may be measured. It will be appreciated that any technique for determining the degree of dimming of the input signal from the phase cut dimmer may be used.

The controller may include a feedback arrangement configured to receive a measure of the driving signal and compare the output power level setting with the measure of the driving signal and generate an error signal, said error signal used to control the number of switching cycles and/or the duration of each switching cycle. The feedback arrangement may provide improved control of the driving signal in changing conditions, such as temperature conditions or variation in the value of an inductive element in the switching power supply.

The controller may be configured to determine the number of switching cycles in the first subset and the number of switching cycles in the second subset using a function of the output power level setting or the error signal. The controller may be configured to control one or more of the number of switching cycles in the first subset, the number of switching cycles in the second subset, the energy transferred during each switching cycles of the first and/or second subset, the duration of each switching cycle of the first and/or second subset, the duration of the switching cycles of the first subset relative to the switching cycles of the second subset, a function used to determine how the switching cycles of the second subset are reduced relative to the first subset and how the switching cycles of the second subset change over the second subset. One or more of the variables may be held constant. For example, the duration of the individual switching cycles of the first subset may be held constant while the number of switching cycles may be altered depending on the error signal or output power level setting.

The controller may have a minimum peak current threshold, the controller configured to control the switch signal such that the minimum peak current threshold is reached during each of the switching cycles. Thus, the duration of each switching cycle may be controlled such that a minimum current flow is detected during that switching cycle. The minimum current threshold may be applied only during the first subset of switching cycles.

The controller may include a maximum burst period threshold. Thus, the burst period, comprising the period of time within a conduction period in which the controller provides its switching signal, may have a maximum length.

The controller may be configured to start the burst period at the start of the conduction period when the input signal comprises a forward phase cut input signal. Alternatively, the controller may be configured to temporally align the end of the burst period with the end of the conduction period when the input signal comprises a backward phase cut input signal. Thus, the controller of the present application is configured to operate with both forward phase cut and backward phase cut dimmers.

The envelope of the burst period, comprising the change in energy transferred to the driving signal per switching cycle over the burst period, may be shaped (by adjusting the duration of each switching cycle over the burst period) to draw an input signal having an approximately flat input current. This is advantageous as this is optimal for providing a hold current to a forward phase cut dimmer. For example, in case of a Fly-back or Buck-Boost converter, one may keep the switching frequency constant while modulating the peak current as the square root of the rectified sine of the phase of the mains signal provided to the phase cut dimmer.

The envelope of the burst period and switching frequency may be shaped to draw a sinusoidal input current that is optimal for high power factor and low total harmonic distortion. For example, in case of a Fly-back or Buck-Boost converter, one may keep the switching frequency constant while modulating the peak current as the rectified sine of the phase of the mains signal. This may result in a substantially sinusoidal input current.

The envelope of the burst period and control of the momentary switching frequency may be shaped to achieve a good power factor while minimizing the size of a converter output capacitor for certain output ripple. For example, in case of a Fly-back or Buck-Boost converter, one may keep the switching frequency constant while modulating the peak current as the square root of the rectified sine of the phase of the mains signal. This may result in an output current having the shape of a rectified sinusoid.

According to a second aspect of the invention we provide a solid state light driver comprising an input terminal for receiving an input signal from a phase cut dimmer, a switching power supply including an inductive element, switching element and a diode with a pair of output terminals for connecting to a solid state light, the driver further including the controller of the first aspect of the invention for controlling said switch element.

The switching power supply may comprise a fly-back converter, a buck-boost converter, a buck converter or a boost converter.

According to a third aspect of the invention we provide a solid state light comprising the solid state light driver as defined in the second aspect of the invention and at least one solid state light element, said driver configured to power said solid state light element.

According to a fourth aspect of the invention, we provide an integrated circuit comprising circuitry embodying the controller of the first aspect of the invention.

There now follows, by way of example only, a detailed description of embodiments of the invention with reference to the following figures, in which:
Figure 1 shows a diagram of a switching power supply for a solid state lighting driver, a dimmer and solid state light element;
Figure 2 shows a functional block diagram of a controller for controlling the switching power supply;
Figure 3 shows a graph of a mapping function used by the controller;
Figure 4 shows the form of the input signal from a phase cut dimmer for a forward phase cut dimmer;
Figure 5 shows the form of the input signal for a backward phase cut dimmer;
Figure 6 shows a detailed view of the switching cycles of a burst during a first subset and a second subset of the burst;
Figure 7 shows a second embodiment of the controller shown in Figure 2;
Figure 8 shows example functions for shaping the envelope of the burst period; and
Figure 9 shows graphs of the variables Ipk and BurstNfrac and an example of how they may be used to determine the first and second subsets of the burst.

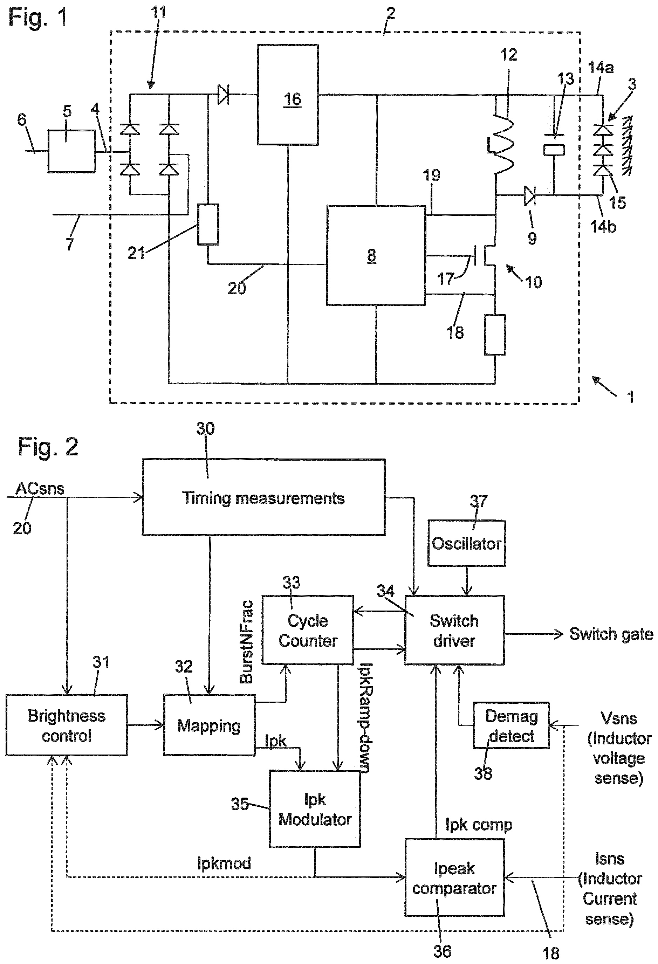

Figure 1 shows a solid state light 1 including a driver circuit 2 for providing power to a solid stage light element 3. The driver circuit 2 is shown, at an input 4, receiving an input signal from a phase cut dimmer 5. The phase cut dimmer 5 typically acts on an AC mains signal received at mains input 6. The driver circuit 2 also receives the AC mains signal at mains input 7.

The driver circuit 2 includes a controller 8 configured to generate a switch signal for controlling a switch 10. The switch 10 is used in the conversion of the input signal from the phase cut dimmer 5 into a driving signal for applying to an output arrangement which, in use, includes the solid state light element 3. The driver circuit 2 additionally includes a rectifier bridge 11 for receiving the phase cut input signal at input 4 and the mains signal at the input 7. The rectifier provides a rectified phase cut to the remainder of the driver circuit. The switch 10 controls the flow of the input signal through an inductive element 12, which, in combination with a diode 9 and an optional smoothing capacitor 13 forms the output arrangement. The output arrangement terminates with output terminals 14a, 14b, which provide the connection to the solid state light element, which in this embodiment comprises a plurality of LEDs 15 arranged in series between the output terminals 14a, 14b. The driver circuit 2 is a single stage driver circuit comprising a single inductive element and a single capacitor for powering the solid state light element. The driver circuit 2 also includes an electromagnetic interference filter and damper 16 as is conventional in such driver circuits 2.

The controller 8 includes a switch signal output 17 for controlling the switch 10. The switch 10 typically comprises a transistor and the switch signal is applied to a gate of the transistor. The controller 8 further includes a current sensing input 18 for detecting current flow through the switch 10 and therefore through the inductive element 12. A voltage sensing input 19 provides the controller 8 with a measure of the voltage at the inductive element 12. An input signal sensing input 20 is provided (with limiting resistor 21) to enable the controller 8 to measure properties of the rectified input signal. The controller 8 may receive a power supply from the filter and damper 16, although it will be appreciated that it is appropriate the controller 8 may receive a power supply from other parts of the arrangement.

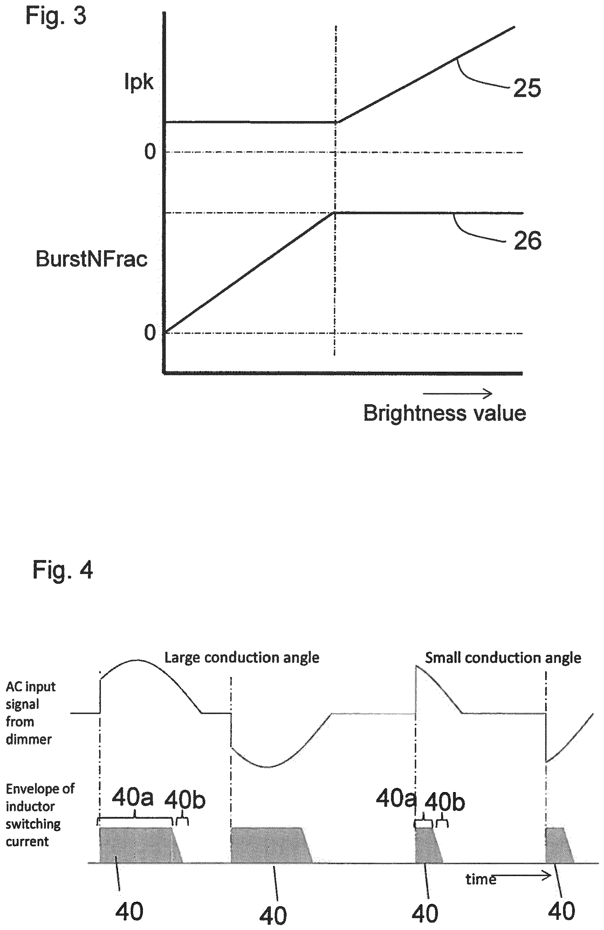

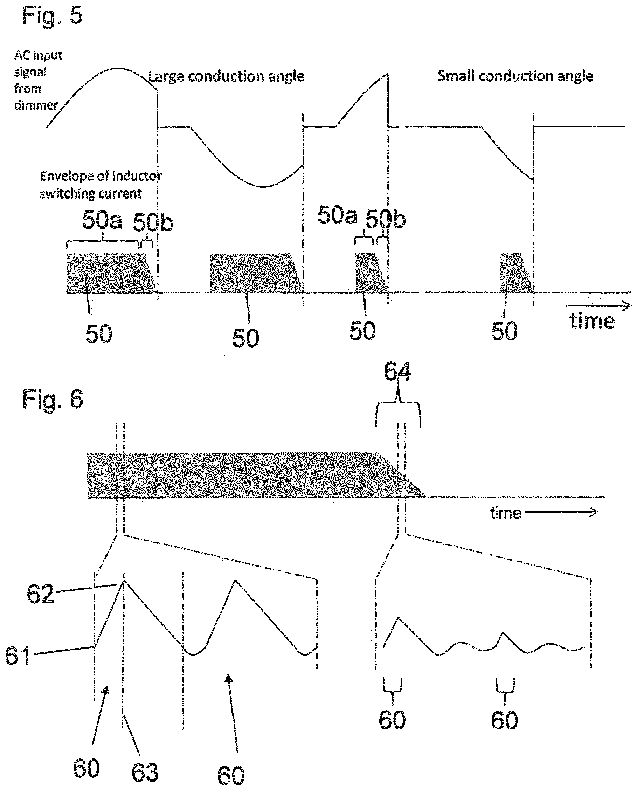

Figure 2 shows a block diagram of the controller 8. The current sensing input 20 is received by a timing element 30 configured to derive timing information from the rectified input signal. Figure 4 shows the form of the input signal from the phase cut dimmer (prior to rectification) for a forward phase cut dimmer and figure 5 shows the form of the input signal (prior to rectification) for a backward phase cut dimmer. It can be seen that the output of the controller comprises a switching signal including a plurality of bursts 40, 50 which themselves comprising a plurality of switching cycles. The bursts 40, 50 includes a first subset of switching cycles 40a, 50a and a second subset of switching cycles 40b, 50b. For the second subset, the peak current during each successive cycle is reduced over the cycles of the second subset. Figure 6 shows the switching cycles (comprising closing and then opening of the switch 10). Thus, during each switching cycle 60, the switch 10 is closed (at point 61) and the current through the inductor 12 increases to a peak current value 62. The switch is then opened at point 63 and the inductor 12 demagnetises. After demagnetisation, a subsequent switching cycle begins.

The current sensing input 20 is also received by brightness control 31. Brightness control 31 is configured to determine the setting of the dimmer by any appropriate means. The brightness control 31 may be configured to measure the dimmer conduction angle to determine the fraction of each half cycle of the mains signal the dimmer is conducting. Alternatively, the control 31 may be configured to measure the average voltage over each half cycle of the mains signal. This "brightness" signal is used by the controller 8 to determine the form of the switching signal.

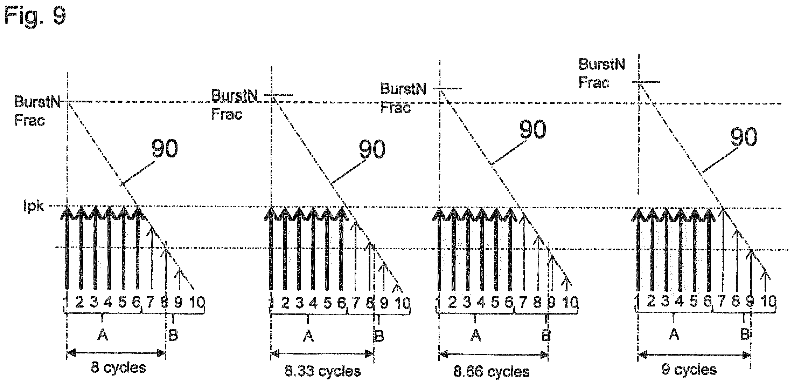

A mapping element 32 receives the brightness signal and, using a mapping function, the brightness signal is converted into two parameters: the maximum peak inductor current Ipk and a signal BurstNFrac. Figure 9 shows how the BurstNFrac signal is used in combination with Ipk to provide a burst having a first subset A of switching cycles and a second subset B of switching cycles, in which the peak current amplitude decreases during the second subset. Figure 9 shows four examples with different BrustNFrac values and the same Ipk value. The value Ipk comprises a constant representing the maximum peak current per switching cycle. BurstNFrac comprises an initial value of a peak ramp down current value. The peak ramp down current 90 is initially set at the BurstNFrac value and is decremented by a fixed amount each switching cycle, although it is represented as a continuous linear function in Figure 9. Alternatively, BurstNFrac may comprise a function representing how the peak current should decreases over the burst. The controller 8 is configured to select the lower of Ipk and the peak ramp down current value at each switching cycle to control the peak current for that switching cycle, as will be explained in more detail below. Accordingly, the leftmost graph in Figure 9 shows BurstNFrac at a first value which causes the peak ramp down current to intersect with Ipk in between switching cycle 6 and switching cycle 7. Thus, switching cycles 7 to 10 have a peak current lower than Ipk as controlled by BurstNFrac. A peak current of Ipk/2 is reached after eight switching cycles. The second graph has a second, higher value of BurstNfrac and Ipk/2 is reached after 8.33 cycles. The third graph has a still higher third value of BurstNfrac and Ipk/2 is reached after 8.66 cycles. The rightmost graph of figure 9 shows BursttNFrac at a still higher, fourth value which causes the peak ramp down current to intersect with Ipk between switching cycle 6 and switching cycle 7. Thus, switching cycles 7 to 10 have a peak current lower than Ipk as controlled by BurstNFrac. A peak current of Ipk/2 is reached after nine switching cycles. Thus, the value of BurstNFrac can be used to control after how many switching cycles the second subset begins and how steeply the peak ramp down current decreases. These graphs demonstrate how changes to BurstNFrac can provide precise control of the energy transferred over the burst by determining where in the burst the first subset ends and the second subset begins. It will be appreciated that how the BurstNFrac value is determined may be based on a predetermined mapping, or alternatively, the controller may determine the average energy per switching cycle of the second subset to achieve the desired energy transfer over the burst and then calculate BurstNFrac accordingly.

It will be appreciated that with an integer number of switching cycles, each cycle having a maximum peak current flow associated therewith, provides an output signal having a certain granularity. The BurstNFrac value of the mapping element 32 is used to reduce this granularity by defining, in combination with the calculated peak ramp down current, a number of switching cycles of the total number of switching cycles during which the peak current flow during each switching cycle is decremented from the maximum peak current value Ipk. Thus, the BurstNFrac signal is used to control the switching signal such that it comprises a first subset of switching cycles and a second subset of switching cycles. The first subset of switching cycles comprises a plurality of switching cycles in which the maximum peak current flow is reached as detected by the controller 8. The second subset of switching cycles comprises at least one, but preferably a plurality, of switching cycles over which the peak inductor current achieved during each of the switching cycles (as measured by the controller 8) is sequentially reduced from the maximum peak current value used during the first subset. This "ramp down" of the peak current value over a plurality of switching cycles is advantageous as the controller can control the energy transferred to the solid state light element 3 with a high resolution. Thus, the controller 8 is configured to control the duration of each switching cycle in the second subset such that a progressively lower peak current is reached during successive cycles. Configuring the controller 8 to calculate a first subset of cycles in a burst in which a maximum peak current is reached during each switching cycle and then a second subset of cycles in the burst in which the peak current reached during each cycle is reduced is advantageous and provides a stable light output. The second subset of cycles may start once the first subset has ended. Alternatively the second subset may be switched before the first subset.

The number of switching cycles in the second subset is determined by BurstNFrac. In other embodiments, the number of switching cycles in the first or second subsets may be fixed. The ramp down of the peak current over the switching cycles of the second subset may be substantially linear. It will be appreciated that the number of switching cycles in the second subset and by what function the peak current is reduced over the second subset may be dependent on the components the controller is controlling or on brightness setting or on the performance of the solid state light.

The mapping of the brightness signal may take the form shown in Figure 3, which shows a mapped value of BurstNfrac 26 and a mapped value of maximum peak current Ipk 25. Figure 3 shows that as the brightness signal increases, the BurstNFrac mapped value 26 is also increased up, from zero, to a threshold maximum value. The maximum peak current value Ipk is shown to have a minimum value (above zero) with increasing brightness signal, followed by a region in which the predetermined peak current increases with increase of the brightness signal. Thus, for low output power the controller 8 will keep a certain minimum of maximum peak current, Ipk. Using a minimum value of the maximum peak current value has been found to provide an accurate calculation of the delivered converter output current. In addition, a properly chosen minimum value of Ipk will assure that the converter draws a certain minimum current, which may be required for keeping the dimmer 5 conducting and also to achieve a predictable amount of energy transfer per switching cycle. At increasing brightness, the effective length of the switching burst is gradually increased by increasing the BurstNFrac signal. In case the brightness signal is demanding higher output power while the burst is at its maximum length, the mapping unit 5 may increase the maximum peak current Ipk instead. In particular, the purpose of this maximum is to assure that the burst does not extend beyond the trailing edge of a backward phase cut dimmer or ends too close to the mains zero crossing.

The burstNFrac signal is passed to a switch cycle counter 33 for controlling the number of switching cycles in the first and second subsets of the burst and how the peak current is reduced over the second subset. The switch cycle counter counts the number of switching cycles generated by a switch driver 34. The BurstNFrac value is used to determine the peak ramp down current. In particular, the burstNfrac value is used as an initial value of peak ramp down current, which is decreased by a fixed amount each switching cycle, the fixed amount corresponding to BurstNFrac/(number of switching cycles in the burst). The switch cycle counter can thus control when the second subset starts and the first subset ends. The maximum peak current value Ipk is passed to a peak current modulator 35 which is used to set the peak current value for each cycle. The current modulator 35 also receives a signal from the burst counter 33 comprising the peak ramp down current value as calculated by the cycle counter. The current modulator 35 compares the peak ramp down current value to the Ipk value and selects the lower of the two. Accordingly, when the peak ramp down current value is lower than Ipk, the second subset begins.

A peak current comparator 36 is provided to measure the peak current from current sensing line 18 and determine when the current through the inductor 12 reaches the peak current value set by the peak current modulator 35. The peak current comparator 36 controls the switch driver 34 to instruct it when a switch cycle should end i.e. the switch signal instructs the opening of the switch 10 when the peak current value set by the current modulator 35 is detected.

The switch driver 34 receives timing information from the timing element 30 to inform it when a burst should start. The timing element 30 is configured to determine the start time of a burst by detecting when the voltage of the rectified input on line 20 reaches a threshold voltage. It has been found that a precise energy transfer can be achieved if the voltage of the input 4 is above a threshold amount when the burst of switching cycles begins. The voltage threshold may comprise 50 Volts. The switch driver is synchronised with a local oscillator 37. The controller 8 also includes a demagnetisation detector 38, which is configured to determine when the inductive element 12 has demagnetised after the previous switching cycle. This is achieved by detecting when the voltage at the inductor 12, by way of voltage sensing input 19, starts to drop rapidly i.e. above a threshold rate. When the inductor 12 has demagnetised, the next switching cycle can begin and thus demagnetisation detector 38 passes an appropriate signal to the switch driver 34.

In use, the brightness control 31 determines the setting of the phase cut dimmer 5 by measuring the waveform received on line 20. The brightness signal is used by the mapping element 32 to determine the total number of switching cycles in a burst, the number of switching cycles in the primary subset and the maximum peak current value to achieve an appropriate energy transfer to the solid state light element 3 for the desired brightness signal. The switch driver 34 starts each burst on instruction from the timing element 30, which positions the burst in each conduction period such that a threshold voltage is present for the duration of the burst, such as 50 volts, at the input 4. Accordingly, the switch driver receives a signal to begin the burst and starts the first switching cycle by closing the switch 10 until the current through the inductor 12 reaches the threshold peak current as set by the peak current modulator. The threshold peak current for the first subset of switching cycles is set as the maximum peak current value determined by the mapping element 32. The switch driver 34 then opens the switch 10 and waits for the inductor to demagnetise, which is detected by demagnetisation detector 38, before starting the next switching cycle. The switch driver informs the switch cycle counter 33 of each switch cycle. While the peak ramp down current value (IpkRamp-down in figure 2) is greater than the maximum peak current, Ipk, value, the peak current modulator 35 holds the peak current threshold (which determines the length of each switching cycle) at the maximum peak current value determined by the mapping element 32. When the peak ramp down current value becomes lower than the maximum peak current value Ipk, the peak current modulator uses the peak ramp down current value as the peak current threshold. The peak current modulator 35 thus reduces the threshold peak current down from the maximum peak current value over a plurality of switching cycles. Figure 6 shows a detailed view of the ramp down region of the burst.

The burst ends when the switching cycle counter 33 determines that the total number of switching cycles determined by the mapping element 33 have been completed. The counters are then reset ready for the next burst in the next conduction period.

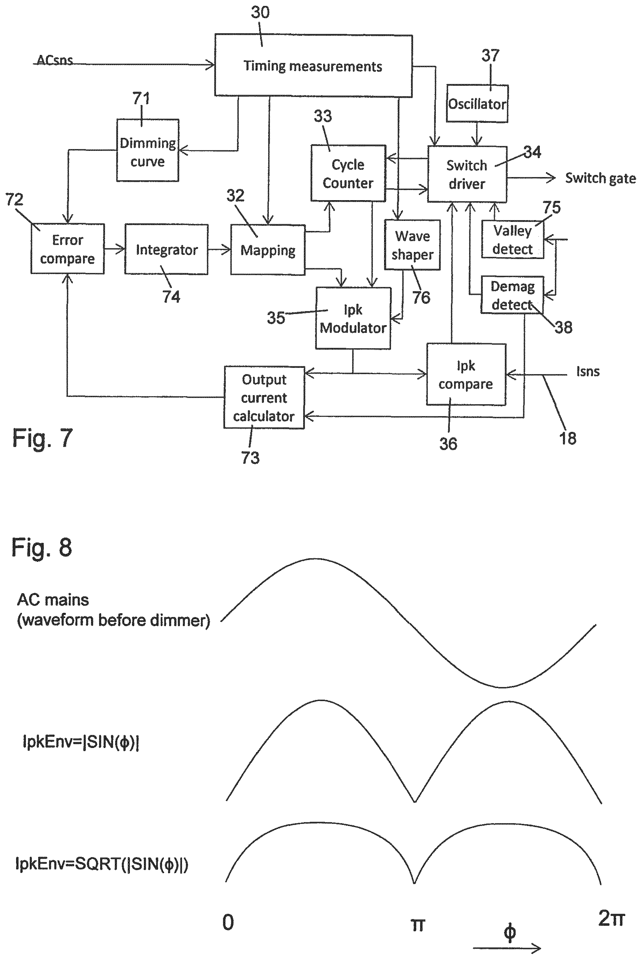

Figure 7 shows a further embodiment of the controller 8. In this embodiment, the brightness control 31 is replaced with a feedback arrangement. In particular, the timing element 30 is configured to determine the setting of the dimmer by any appropriate means. The timing element 30 may be configured to measure the dimmer conduction angle to determine the fraction of each half cycle of the mains signal the dimmer is conducting. Alternatively, the timing element 30 may be configured to measure the average voltage over each half cycle of the mains signal. This "dimmer setting" signal is passed to an output current level setting element 71 for determining an output current level setting over a half mains cycle as a function of the dimmer setting.

A feedback comparator 72 uses the output current level setting and a measure of the actual output current over a burst period from output current calculator 73 to generate an error signal.

The error signal is received by an integrator 74 which integrates the error signal and provides a feedback loop control signal. The feedback loop control signal is used by the mapping element 32 of the controller 8 to determine the Ipk value and the BurstNFrac value, which define the form of the switching signal.

This embodiment further includes a valley detection element 75 for providing the switch driver with details of a valley in the output waveform applied to the inductor 12. This technique can be used to reduce switching losses as will be known to those skilled in the art.

The peak current modulator 35 also receives a signal from a wave shaping element 76. The peak current modulator 35 may, in addition to effecting the ramp down of the peak current threshold, shape the envelope of each burst period using the signal from the wave shaping element 76. The envelope of the burst and switching frequency may be shaped to draw an approximately flat input current that is optimal for providing a hold current to a forward phase cut dimmer. Alternatively, the envelope of the burst and switching frequency may be shaped to draw a sinusoidal input current that is optimal for high power factor and low total harmonic distortion. Alternatively the envelope of the burst and control of the momentary switching frequency may be shaped to achieve a good power factor while minimizing the size of the converter output capacitor for a certain output ripple. Thus, the peak current modulator 35 signal may be modified by multiplication with an envelope shaping signal, IpkEnv, from the waveform shaping element 76. In this example, the envelope signal is modulated with double the AC mains frequency and is intended to shape the converter input current for achieving a high power factor (IpkEnv=|sin(Phi)|), a flat converter input current (IpkEnv=SQRT|sin(Phi)|) or minimizing the converter output ripple current, where phi is the phase (in radians) of the mains input signal. Figure 8 shows these envelope shaping functions that are used to additionally control the duration of each switching cycle over the burst period.

## Claims

1. A switching power supply controller (8), comprising an input signal sensing input (20) connected to a phase cut dimmer (5) and a switch signal output (17) connected to a switch (10) of a switching power supply (9, 10, 12, 13), and configured to generate a switch signal for controlling the switch (10) of the switching power supply (9, 10, 12, 13) to convert an input signal from the phase cut dimmer (5) into a driving signal for a solid state lighting element (3), **characterized in that** the switching power supply controller (8) is configured to;
determine a conduction period of the input signal from the phase cut dimmer (5) within a half cycle period of the input signal; determine a burst period (40, 50) within said conduction period comprising a period of time less than said conduction period;
generate the switch signal comprising a plurality of switching cycles over the burst period, the switch signal comprising a first subset of switching cycles (40a, 50a) and a second subset of switching cycles (40b, 50b), wherein the switching power supply controller (8) is configured to control the switching cycles of the second subset such that the average energy transferred per switching cycle to the driving signal is less than the average energy transferred per switching cycle to the driving signal for the switching cycles of the first subset.

2. A switching power supply controller according to claim 1, configured to control the switch signal such that the energy transferred per switching cycle to the driving signal is decremented over the switching cycles of the second subset.

3. A switching power supply controller according to claim 1 or claim 2, in which the second subset includes a plurality of switching cycles, the duration of said switching cycles controlled such that a peak current achieved over subsequent switching cycles in the second subset is reduced over the second subset.

4. A switching power supply controller according to any preceding claim, configured to control the duration of the switching cycles of the first subset by determining when a current flow during a switching cycle reaches a predetermined maximum peak current (Ipk).

5. A switching power supply controller according to any preceding claim, in which the first subset includes a plurality of switching cycles in which the energy transferred to the driving signal in each switching cycle is maintained substantially constant.

6. A switching power supply controller according to any preceding claim, configured to position the burst period within the conduction period by a) using a voltage threshold, wherein the burst period is configured to comprise a period of time during the conduction period in which the voltage of the input signal is greater than or equal to the voltage threshold or b) by using timing information of the conduction period and positioning the burst period such that it is temporally spaced from the end of the conduction period for a forward phase cut dimmer or spaced from the beginning of the conduction period for a backward phase cut dimmer.

7. A switching power supply controller according to any preceding claim, configured to determine an output power level setting by measurement of the input signal, the controller configured to generate the switching signal as a function of the output power level setting.

8. A switching power supply controller according to claim 7, including a feedback arrangement configured to receive a measure of the driving signal and compare the output power level setting with the measure of the driving signal and generate an error signal, said error signal used to control the number of switching cycles and/or the duration of each switching cycle.

9. A switching power supply controller according to claim 7 configured to determine the average energy transferred to the driving signal per switching cycle of the second subset using a function of the output power level setting.

10. A switching power supply controller according to claim 8, configured to determine the average energy transferred to the driving signal per switching cycle of the second subset using a function of the error signal.

11. A switching power supply controller according to any preceding claim, having a minimum peak current threshold, the controller configured to control the switch signal such that the minimum peak current threshold is reached during each of the switching cycles.

12. A switching power supply controller according to any preceding claim, configured to start the burst period at the start of a conduction period when the input signal comprises a forward phase cut input signal.

13. A switching power supply controller according to any preceding claim, configured to temporally align the end of the burst period with the end of the conduction period when the input signal comprises a backward phase cut input signal.

14. A solid state light driver comprising an input terminal for receiving an input signal from a phase cut dimmer, a switching power supply including an inductive element, switching element, a diode, and a pair of output terminals for connecting to a solid state light, the driver further including the switching power supply controller of any one of claims 1 to 13 for controlling said switch element.

15. A solid state light comprising the solid state light driver as defined in claim 14 and at least one solid state light element, said driver configured to power said solid state light element.

## Patentansprüche

1. Schaltnetzteilsteuergerät (8), welches einen Eingangssignal erfassenden Eingang (20), der mit einer Phasenschnitt-Helligkeitsregelung (5) verbunden ist, und einen Schaltsignalausgang (17), der mit einem Schalter (10) eines Schaltnetzteils (9, 10, 12, 3) verbunden ist, umfasst und ausgelegt ist, um ein Schaltsignal zum Steuern des Schalters (10) des Schaltnetzteils (9, 10, 12, 13) zu erzeugen, um ein Eingangssignal von der Phasenschnitt-Helligkeitsregelung (5) in ein Ansteuersignal für ein Festkörper-Beleuchtungselement (3) umzuwandeln,
**dadurch gekennzeichnet, dass**
das Schaltnetzteilsteuergerät (8) ausgelegt ist, um
eine Übertragungsperiode des Eingangssignals von der Phasenschnitt-Helligkeitsregelung (5) innerhalb einer Halbzyklusperiode des Eingangssignals zu ermitteln;
eine Burst-Periode (40, 50) in der Übertragungsperiode zu ermitteln, die eine Periode umfasst, die kleiner als die Übertragungsperiode ist;
das Schaltsignal mit mehreren Schaltzyklen über der Burst-Periode zu erzeugen, wobei das Schaltsignal eine erste Teilmenge von Schaltzyklen (40a, 50a) und eine zweite Teilmenge von Schaltzyklen (40b, 50b) umfasst, wobei das Schaltnetzteilsteuergerät (8) ausgelegt ist, um die Schaltzyklen der zweiten Teilmenge so zu steuern, dass die pro Schaltzyklus zu dem Ansteuersignal übertragene durchschnittliche Energie geringer als die pro Schaltzyklus zu dem Ansteuersignal für die Schaltzyklen der ersten Teilmenge übertragene durchschnittliche Energie ist.

2. Schaltnetzteilsteuergerät nach Anspruch 1, welches ausgelegt ist, um das Schaltsignal so zu steuern, dass die pro Schaltzyklus zu dem Ansteuersignal übertragene Energie über die Schaltzyklen der zweiten Teilmenge dekrementiert ist.

3. Schaltnetzteilsteuergerät nach Anspruch 1 oder 2, bei dem die zweite Teilmenge mehrere Schaltzyklen umfasst, wobei die Dauer der Schaltzyklen so gesteuert wird, dass ein über folgenden Schaltzyklen in der zweiten Teilmenge erreichter Spitzenstrom über der zweiten Teilmenge reduziert ist.

4. Schaltnetzteilsteuergerät nach einem vorhergehenden Anspruch, welches ausgelegt ist, um die Dauer der Schaltzyklen der ersten Teilmenge durch Ermitteln, wann ein Stromfluss während eines Schaltzyklus einen vorbestimmten maximalen Spitzenstrom (Ipk) erreicht, zu steuern.

5. Schaltnetzteilsteuergerät nach einem vorhergehenden Anspruch, bei dem die erste Teilmenge mehrere Schaltzyklen umfasst, in denen die zu dem Ansteuersignal in jedem Schaltzyklus übertragene Energie im Wesentlichen konstant gehalten ist.

6. Schaltnetzteilsteuergerät nach einem vorhergehenden Anspruch, welches ausgelegt ist, um durch a) Verwenden eines Spannungsschwellenwerts, wobei die Burst-Periode ausgelegt ist, um eine Periode während der Übertragungsperiode, in der die Spannung des Eingangssignal größer oder gleich dem Spannungsschwellenwert ist, zu umfassen, oder durch b) Verwenden von Zeitsteuerinformationen der Übertragungsperiode und Positionieren der Burst-Periode so, dass sie für eine Phasenanschnitt-Helligkeitsregelung zeitlich von dem Ende der Übertragungsperiode beabstandet ist oder für eine Phasenabschnitt-Helligkeitsregelung von dem Anfang der Übertragungsperiode beabstandet ist, die Burst-Periode in der Übertragungsperiode zu positionieren.

7. Schaltnetzteilsteuergerät nach einem vorhergehenden Anspruch, welches ausgelegt ist, um eine Ausgangsleistungswerteinstellung durch Messung des Eingangssignals zu ermitteln, wobei das Steuergerät ausgelegt ist, um das Schaltsignal als Funktion der Ausgangsleistungswerteinstellung zu erzeugen.

8. Schaltnetzteilsteuergerät nach Anspruch 7, mit einer Rückkopplungsanordnung, welche ausgelegt ist, um eine Messgröße des Ansteuersignals zu empfangen und die Ausgangsleistungswerteinstellung mit der Messgröße des Ansteuersignals zu vergleichen und ein Fehlersignal zu erzeugen, wobei das Fehlersignal verwendet wird, um die Anzahl an Schaltzyklen und/oder die Dauer jedes Schaltzyklus zu steuern.

9. Schaltnetzteilsteuergerät nach Anspruch 7, welches ausgelegt ist, um die zu dem Ansteuersignal pro Schaltzyklus der zweiten Teilmenge übertragene durchschnittliche Energie mithilfe einer Funktion der Ausgangsleistungswerteinstellung zu ermitteln.

10. Schaltnetzteilsteuergerät nach Anspruch 8, welches ausgelegt ist, um die zu dem Ansteuersignal pro Schaltzyklus der zweiten Teilmenge übertragene durchschnittliche Energie mithilfe einer Funktion des Fehlersignals zu ermitteln.

11. Schaltnetzteilsteuergerät nach einem vorhergehenden Anspruch, mit einem Mindestspitzenstromschwellenwert, wobei das Steuergerät ausgelegt ist, um das Schaltsignal so zu steuern, dass der Mindestspitzenstromschwellenwert während eines jeden der Schaltzyklen erreicht wird.

12. Schaltnetzteilsteuergerät nach einem vorhergehenden Anspruch, welches ausgelegt ist, um die Burst-Periode bei Beginn einer Übertragungsperiode zu beginnen, wenn das Eingangssignal ein Phasenanschnitt-Eingangssignal umfasst.

13. Schaltnetzteilsteuergerät nach einem vorhergehenden Anspruch, welches ausgelegt ist, um das Ende der Burst-Periode mit dem Ende der Übertragungsperiode zeitlich auszurichten, wenn das Eingangssignal ein Phasenabschnitt-Eingangssignal umfasst.

14. Festkörperleuchtentreiber mit einer Eingangsklemme zum Empfangen eines Eingangssignals von einer Phasenschnitt-Helligkeitsregelung, einem Schaltnetzteil mit einem induktiven Element, Schaltelement, einer Diode und einem Paar von Ausgangsklemmen zum Anbinden an eine Festkörperleuchte, wobei der Treiber weiterhin das Schaltnetzteilsteuergerät nach einem der Ansprüche 1 bis 13 zum Steuern des Schaltelements umfasst.

15. Festkörperleuchte, welche den Festkörperleuchtentreiber nach Anspruch 14 und mindestens ein Festkörperbeleuchtungselement umfasst, wobei der Treiber ausgelegt ist, um das Festkörperbeleuchtungselement mit Energie zu versorgen.

## Revendications

1. Contrôleur d'alimentation à découpage (8), comprenant une entrée de détection de signal d'entrée (20) connectée à un gradateur à coupure de phase (5) et une sortie de signal de commutation (17) connectée à un commutateur (10) d'une alimentation à découpage (9, 10, 12, 13), et configuré pour générer un signal de commutation pour contrôler le commutateur (10) de l'alimentation à découpage (9, 10, 12, 13) afin de convertir un signal d'entrée provenant du gradateur à coupure de phase (5) en un signal pilote pour un élément d'éclairage à semi-conducteur (3),
**caractérisé en ce que**
le contrôleur d'alimentation à découpage (8) est configuré pour :
déterminer une période de conduction du signal d'entrée provenant du gradateur à coupure de phase (5) dans une période d'un demi-cycle du signal d'entrée ;
déterminer une période de salve (40, 50) dans ladite période de conduction comprenant une période inférieure à ladite période de conduction ;
générer le signal de commutation comprenant une pluralité de cycles de commutation durant la période de salve, le signal de commutation comprenant un premier sous-ensemble de cycles de commutation (40a, 50a) et un second sous-ensemble de cycles de commutation (40b, 50b), dans lequel
le contrôleur d'alimentation à découpage (8) est configuré pour contrôler les cycles de commutation du second sous-ensemble de sorte que l'énergie moyenne transférée au signal pilote par cycle de commutation est inférieure à l'énergie moyenne transférée au signal pilote par cycle de commutation pour les cycles de commutation du premier sous-ensemble.

2. Contrôleur d'alimentation à découpage selon la revendication 1, configuré pour contrôler le signal de commutation de sorte que l'énergie transférée au signal pilote par cycle de commutation est décrémentée durant les cycles de commutation du second sous-ensemble.

3. Contrôleur d'alimentation à découpage selon la revendication 1 ou la revendication 2, dans lequel le second sous-ensemble comporte une pluralité de cycles de commutation, la durée desdits cycles de commutation étant contrôlée de sorte qu'un courant de crête obtenu durant des cycles de commutation ultérieurs dans le second sous-ensemble est réduit durant le second sous-ensemble.

4. Contrôleur d'alimentation à découpage selon l'une quelconque des revendications précédentes, configuré pour contrôler la durée des cycles de commutation du premier sous-ensemble en déterminant quand un flux de courant pendant un cycle de commutation atteint un courant de crête maximal prédéfini (Ipk).

5. Contrôleur d'alimentation à découpage selon l'une quelconque des revendications précédentes, dans lequel le premier sous-ensemble comporte une pluralité de cycles de commutation, l'énergie transférée au signal pilote dans chaque cycle de commutation étant maintenue sensiblement constante.

6. Contrôleur d'alimentation à découpage selon l'une quelconque des revendications précédentes, configuré pour placer la période de salve dans la période de conduction a) au moyen d'un seuil de tension, la période de salve étant configurée pour comprendre une période pendant la période de conduction dans laquelle la tension du signal d'entrée est supérieure ou égale au seuil de tension ou b) au moyen d'informations temporelles concernant la période de conduction et en plaçant la période de salve de sorte qu'elle est espacée dans le temps par rapport à la fin de la période de conduction pour un gradateur à coupure de phase ascendante ou espacé par rapport au début de la période de conduction pour un gradateur à coupure de phase descendante.

7. Contrôleur d'alimentation à découpage selon l'une quelconque des revendications précédentes, configuré pour déterminer un réglage de niveau de puissance de sortie par la mesure du signal d'entrée, le contrôleur étant configuré pour générer le signal de commutation comme fonction du réglage de niveau de puissance de sortie.

8. Contrôleur d'alimentation à découpage selon la revendication 7, comportant un agencement de rétroaction configuré pour recevoir une mesure du signal pilote et comparer le réglage de niveau de puissance de sortie à la mesure du signal pilote et générer un signal d'erreur, ledit signal d'erreur étant utilisé pour contrôler le nombre de cycles de commutation et/ou la durée de chaque cycle de commutation.

9. Contrôleur d'alimentation à découpage selon la revendication 7, configuré pour déterminer l'énergie moyenne transférée au signal pilote par cycle de commutation du second sous-ensemble au moyen d'une fonction du réglage de niveau de puissance de sortie.

10. Contrôleur d'alimentation à découpage selon la revendication 8, configuré pour déterminer l'énergie moyenne transférée au signal pilote par cycle de commutation du second sous-ensemble au moyen d'une fonction du signal d'erreur.

11. Contrôleur d'alimentation à découpage selon l'une quelconque des revendications précédentes, comportant un seuil de courant de crête minimal, le contrôleur étant configuré pour contrôler le signal de commutation de sorte que le seuil de courant de crête minimal est atteint pendant chacun des cycles de commutation.

12. Contrôleur d'alimentation à découpage selon l'une quelconque des revendications précédentes, configuré pour démarrer la période de salve au début d'une période de conduction quand le signal d'entrée comprend un signal d'entrée à coupure de phase ascendante.

13. Contrôleur d'alimentation à découpage selon l'une quelconque des revendications précédentes, configuré pour aligner dans le temps la fin de la période de salve avec la fin de la période de conduction quand le signal d'entrée comprend un signal d'entrée à coupure de phase descendante.

14. Pilote d'éclairage à semi-conducteur comprenant une borne d'entrée destinée à recevoir un signal d'entrée provenant d'un gradateur à coupure de phase, une alimentation à découpage comportant un élément inductif, un élément de commutation, une diode et une paire de bornes de sortie destinées à la connexion avec un éclairage à semi-conducteur, le pilote comportant en outre le contrôleur d'alimentation à découpage selon l'une quelconque des revendications 1 à 13 pour contrôler ledit élément de commutation.

15. Éclairage à semi-conducteur comprenant le pilote d'éclairage à semi-conducteur tel que défini dans la revendication 14 et au moins un élément d'éclairage à semi-conducteur, ledit pilote étant configuré pour alimenter ledit élément d'éclairage à semi-conducteur.
